# EUROPEAN PATENT SPECIFICATION

(11) **EP 4 010 296 B1**
(45) Date of publication and mention of the grant of the patent: **26.07.2023**
(21) Application number: 19758606.8
(22) Date of filing: 06.08.2019
(51) Int. Cl.: C04B 28/04, C04B 111/10, B28B 11/24

(54) **METHOD FOR PRODUCTION OF CONCRETE PRECAST ELEMENTS, IN PARTICULAR RAILWAY SLEEPERS**
VERFAHREN ZUR HERSTELLUNG VON BETONFERTIGTEILEN, INSBESONDERE EISENBAHNSCHWELLEN
PROCÉDÉ DE PRODUCTION D'ÉLÉMENTS PRÉFABRIQUÉS EN BÉTON, EN PARTICULIER DE TRAVERSES DE CHEMIN DE FER

(43) Date of publication of application: 15.06.2022
(73) Proprietor: Pawluk, Jaroslaw Jerzy, 44-105 Gliwice (PL)
(72) Inventor: Pawluk, Jaroslaw Jerzy, 44-105 Gliwice (PL)
(74) Representative: Radlowski, Jakub
(86) International application number: PCT/EP2019/025259
(87) International publication number: WO 2021/023360

(56) References cited:
- WO-A1-2014/165257
- CN-A- 109 531 775
- DE-A1- 10 116 849
- DE-A1-102008 037 171
- DE-C- 918 859
- KR-A- 20140 087 268
- US-A- 4 551 176
- US-A- 5 076 851
- US-B2- 8 221 541
- STEPHEN BRUNAUER ET AL: "Hardened portland cement pastes of low porosity VI. Mechanism of the hydration process", CEMENT AND CONCRETE RESEARCH., vol. 3, no. 2, 1 March 1973 (1973-03-01), pages 129-147, XP055674815, US ISSN: 0008-8846, DOI: 10.1016/0008-8846(73)90043-4

## Description

The subject of the invention is the production method of the concrete precast elements, particularly railway sleepers, made of prestressed concrete based on special cement.

The introduction of the dry technology in cement industry caused an increase of potassium content in cement and consequently, the lack of ettringite durability during thermal treatment of concrete, especially at temperature exceeding 70°C. Lack of ettringite durability may also occur in massive concrete elements made of cement with a high heat of hydration. Ettringite is a phase which forms quickly after mixing cement with water; which is accompanied by a volume increase. If the cement paste is still plastic at that time, the expansion linked with ettringite crystallization is does not causing the concrete cracking, because volume changes are only producing the deformation of the still plastic concrete. This does not produce tensile stress and therefore, concrete cracking does not occur. The situation is different when ettringite is not durable at the initial stage of concrete setting and forms only after the concrete has hardened. This phenomenon is referred to as "delayed ettringite formation" (DEF) and usually leads to cracking and, consequently, lack of concrete frost resistance. In the 1980s, delayed ettringite formation destroyed millions of railway sleepers in the railway lines ties, especially in the United States of America. It was determined that the factors causing lack of ettringite durability were: temperature and the content of watersoluble sodium and potassium compounds. To eliminate the above-mentioned phenomenon, the content of sodium and potassium in cement must be reduced to ≤0.6% of the sodium equivalent, that is (after conversion to oxides), the sum of Na₂O + 0.658 K₂O, i.e. Na₂Oₑ ≤ 0.6%. Despite sodium and potassium content reduction, delayed ettringite formation may still take place in situations where thermal treatment of concrete is carried out, especially at a temperature equal to or exceeding 70°C. In this case, the cement heat of hydration should be additionally taken into account, which is especially high in the rapidhardening cements. This is the precise cause of the cracking that sometimes occurs in massive concrete elements in which the heat of cement hydration causes an increase of concrete temperature, exceeding that dangerous level. At the beginning of the 1970s, a team of American scientists headed by Stephen Brunauer developed the cement composition (stated e.g. in the following paper: Odler I., Skalny J., Brunauer S., 6th ICCC, Vol. II, p. 30, Moscow 1974), which allowed to reduce the water-cement ratio (w/c) in the paste to as low as 0.2 in the period when plasticizers had not been invented yet. This increased the strength of the paste and thus of concrete. Since plasticizers were not known at that time, researchers kept seeking the cement composition which would allow to reduce the water-cement ratio and thus increase the concrete strength without the necessity of adding them. "Brunauer's cement" never got to be manufactured because plasticizers were introduced very soon after its development. The use of plasticizers was much simpler than production of special cement. No ettringite forms in such cement paste [mortar, concrete] because the cement does not contain sulphates; therefore, it is an "accidental" effect of this technology. Brunauer's team was never interested in delayed ettringite formation or even ettringite itself. The delayed ettringite formation problem occurred at least ten years later, in 1980. In order to delay the reaction of tricalcium aluminate with water, the sulphate-free cement contained retarders other than sulphates, which allowed to obtain good consistence of paste and thus of concrete with a very low w/c ratio. It also ensured high concrete strength, which was the goal of this team works. Brunauer's team applied carbonates with high water solubility, i.e. sodium and potassium carbonates. However, the research carried out by Brunauer's team did not include thermal treatment of concrete. Meanwhile, thermal treatment of concrete precast elements is necessary in the technology of reinforced concrete elements production because it ensures obtaining their sufficient strength in the shortest possible time that allows the tension of the prestressing reinforcement to be released as soon as possible and consequently enables the tension stress transfer from the mould to the prestressed concrete precast elements. The time of obtaining the minimal strength enabling to release the tension is also determining the production line capacity, so the thermal treatment of prestressed concrete precast elements and shortening the concrete setting time is important for the modern precast elements plant.

A German patent application published under No. DE102008037171 (A1) describes concrete used to manufacture, among others, railway sleepers, whose cement content is at least 400 kg/m³ and simultaneously the water mass to cement mass ratio is lower than 0.4, while cement content is lower than 550 kg/m³, the plasticizer admixture content is 8 kg/m³ to 10 kg/m³, the share of fine aggregate (grain size: up to 4 mm) is 750 kg/m³ to 850 kg/m³ and the coarse aggregate content (grain size: 8 mm to 16 mm) is 900 kg/m³ to 1000 kg/m³. The coarse aggregate in the described solution comes at least partially from concrete recycling, including recycling of used concrete sleepers. The preferred cement content in concrete can be 450-550 kg/m³ and the water content 135-220 kg/m³. The described solution also includes the elements made of a concrete mixture with a stated composition and application of self-consolidating concrete (SCC) to manufacture reinforced railway sleepers: after placing prestressing steel tendons in a mould and filling it with concrete, the mould is left for a specified time of preliminary curing in the production hall, and afterwards it is placed in a chamber with an increased steam temperature which accelerates hardening, and when the concrete gains sufficient strength, the mould leaves the chamber and the reinforcement tension is released.

An international application published under No. WO2014165257(A1) and entitled "Composite railroad sleepers and methods of production and use thereof" describes the manufacturing process of railway sleepers consisting in the preparation of a concrete mixture containing, among others, natural calcium silicate (particle size: ca. 1 µm to ca. 100 µm), sand, fine and coarse aggregates, water and optional admixtures, whereas after filling the railway sleepers moulds with the mixture, they are cured at a temperature from 20°C to ca. 150°C (the preferred range is 60-110°C) for one to ca. 80 hours (the preferred range is 20-60 hours). The process takes place under a pressure higher than the atmospheric pressure, up to ca. 60 psi (ca. 4 atmospheres), in a steam atmosphere with the partial pressure ranging from 40% to saturation. The moulds may be equipped with steel prestressing tendons.

Another patent application no. KR20140087268(A) "Concrete composition for PC tie comprising blast furnace slag" discloses a composition where the binder comprises 400 - 500 kg/m³ of aggregate, 700 - 900 kg/m³ of fine aggregate, 920 - 1200 kg/m³ of coarse aggregate, 125 - 150 kg/m³ of water, 4 - 5 kg/m³ of admixture, 20 - 35% by weight crude steel portland cement, 1 - 20% by weight of ordinary portland cement and 45 - 60% by weight of a blast furnace slag fine powder binder. Said blast furnace slag fine powder binder comprises 0.1 - 30 parts by weight of a desulfurization slag based on 100 parts by weight of a blast furnace slag powder binder. Concrete composition may further comprise 30 - 70 kg/m³ steel fibres and 0.1 to 10 parts by weight of gypsum based on 100 parts by weight of the blast furnace slag fine powder binder.

Literature points out that the volume and appearance time of the expansion related to delayed ettringite formation depends on the temperature at which thermal treatment of concrete is applied (Wieker W., Herr R., Schubert H., Proc. Int. Coll. Corrosion of Cement Paste, 16-17 November, Kraków 1994). The expansion increases with temperature, however, during low-pressure steam curing, this happens till the temperature reaches ca. 90 °C, while at a temperature of ca. 110 °C, ettringite undergoes decomposition in the autoclaving process and various phases appear in concrete, depending on the sodium and potassium hydroxide concentration. It is also pointed out that hydraulic activity of cement influences the volume of the expansion caused by delayed ettringite formation. The expansion is high with rapid hardening cements, while the expansion is prevented by slag cements and cements containing admixtures of silica fly ashes or pozzolana additives (Kelham S.: 10th ICCC Gothenburg, v. IV, paper 4IV059, Gothenburg 1997). The already known solutions do not eliminate the problem of delayed ettringite formation in the production of concrete precast elements using rapidhardening cement mixtures, especially as precast elements are produced at an elevated temperature (above 50 °C), that is, in the conditions which promote the above-mentioned unfavourable phenomenon.

The subject of the invention is a method for production of concrete precast elements in particular railway sleepers, made of prestressed concrete, using a mixture with a special composition and in the process conditions specified below.

According to the process of the present invention, concrete elements are composed of a concrete mixture containing sulphate-free cement with the addition of sodium or potassium carbonates (0.2% to 4% by mass of cement). The share of cement in 1 m³ of the mixture is 220 kg to 500 kg. The appropriate amount of water to the mixture is added, while the preferred water-cement ratio (w/c) should not exceed 0.4. Simultaneously, the sulphate content in cement (expressed as SO₃) does not exceed 0.5% by mass. Then the quantity of 0.5% to 3% by mass of cement of calcium, sodium or potassium lignosulphonates to the mixture is added. Advantageous embodiment of the invention combines potassium carbonate and lignosulphonate (e.g. sodium one). Also the addition of 0.2% to 3% by mass of cement of sodium or potassium phosphates can be added, as retarders.

The concrete mixture also contains other necessary ingredients, that is, fine aggregate (e.g. sand), and coarse aggregates and preferably the plasticizer, e.g. the polycarboxylate plasticiser.

This is important to keep the balance between constituents acting as retarders and accelerators of cement bonding reaction. Acceleration of concrete maturing process is necessary for shortening production cycle of precast elements, however retarders also must be present in the mixture in order to avoid too fast hardening especially in the initial phase after the mixture is homogenized. Sulphates in cement act like retarders, so in the sulphate-free cement it should be replaced by another compound or compounds. Lignosulphonates are plasticisers but they include saccharides that may act as retarders of hydration; this can at least partially replace absent sulphates. Substitutive function is performed by sodium or potassium phosphates or carbonates.

From the other hand the process according to the invention is intended to shorten precast elements production cycle. In this regard it is advantageous to use fine cement having specific surface area 3900 cm²/g or higher (determined e.g. according to the Blaine's method). Thanks to this attribute concrete precast elements obtain their minimum strength faster. High specific surface area results in sealing microstructure of concrete. Microstructure of cement may also be improved by addition of 5-8% of silica fume. Both, fine cement with high specific surface area and silica fume, increase water demand of the concrete mixture, therefore maintaining preferred w/c ratio 0.4 or less require adding higher quota of plasticisers.

The mixture undergoes homogenization in a special mixer and then a concrete precast element is formed by filling an appropriate mould with the mix, while the mould is equipped with prestressing tendons and maintains them in a state of tensile stress during the concrete curing period. In the production process of the railway sleepers, the prestressing elements are usually steel tendons.

The precast units in the moulds undergo thermal treatment in the curing chamber in steam atmosphere at temperature of 69°C - 98°C (the preferred range is 80°C - 85°C). Such temperature range ensures sufficiently fast concrete maturing, significantly shortening the hardening process of the concrete mixture. The process may also be conducted at higher temperatures, though it is accelerated first and foremost by the heat of cement hydration and the partial pressure of the steam atmosphere in the curing chamber. However, above 85°C hardening acceleration is no longer significant. It is preferred when before the main thermal treatment in the abovesaid temperature 69°C - 98°C the moulds with precast units are being submitted to pre-treatment at a temperature of up to 10 - 20°C, which is then gradually increased, advantageously not faster than 30°C per hour till it reaches target temperature 69°C - 98°C and then they undergo right treatment phase at least 240 min. After achieving the target value (which does not exceed 98°C), the temperature rise is stopped.

Thermal treatment takes place in the atmosphere of increased humidity and under the pressure higher than 40% of saturated vapour pressure, while the preferred range is 80% - 100% of saturated vapour pressure. This is necessary to guarantee the appropriate hardening rate, taking into account the fact that in the described case, one uses a low water content mix, that is, a concrete mix with a low water/cement ratio, compared to traditional cement concretes.

Thermal treatment of precast elements may be carried out in a special tunnel or in steam curing chambers where the above-mentioned temperature and humidity is maintained.

The process time is 240 min to 375 min. (without cooling down time) which is depending on several parameters like humidity, treatment temperature and initial temperature that precast elements have before the right treatment phase. The higher initial temperature is - the shorter time of main treatment process is required in order to reach desired strength. Usually, after about four hours after starting the thermal treatment of precast elements, the minimal compressive strength is already obtained in the most cases, allowing for the tension of the prestressing elements to be released. That minimal strength depends on the prestressing force. The values required by standards vary among countries, but the standard minimal strength usually falls within the range of 45 MPa to 56 MPa. Depending on the conditions of the curing process of the concrete from which the precast elements are produced, the time necessary to obtain the appropriate strength may be a bit longer. In one of the preferred embodiments of the invention, the process starts at a temperature 10 - 20°C which than raises 30°C/1h until least target value of 69°C or more (pre-treatment). The adequate time of the whole process (including pre- and main treatment) shall be more than 300 min. but application of the mixture according to the invention and given concrete curing conditions guarantee that the time in question shall not exceed 375 min. After that time, the tension tendons may be released; consequently, the stress is transferred from the mould to the prestressed concrete precast element, which has already gained sufficient strength to maintain tension stability. The moulds filled with concrete may be exposed to working temperature and humidity directly, without pre-treatment phase. This allows to shorten the treatment time to minimum and in consequence to accelerate production phase. Temperature of the moulds filled with concrete can be higher than 20°C but should not exceed 28°C.

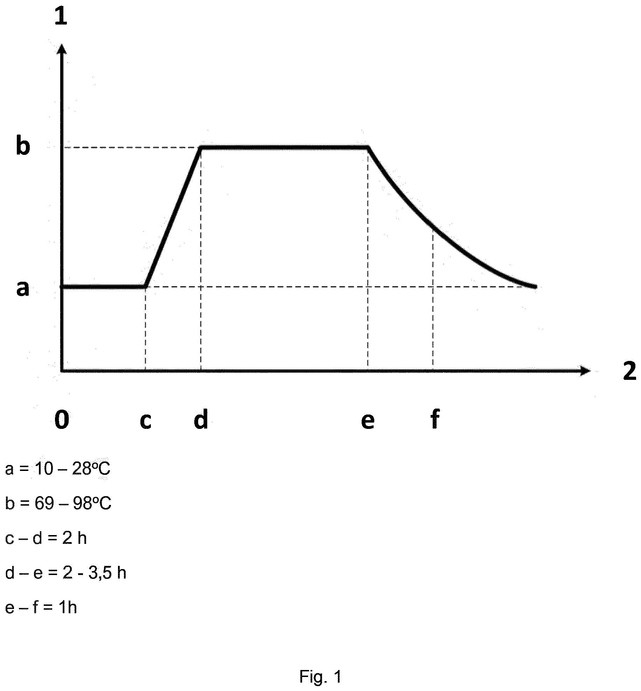

Figure 1 presents the chart of temperature over time curve, including pre-treatment and cooling phase. Pre-treatment starts in the temperature (a) in a range 10 - 20°C, then within 2 hours (c) - (d) temperature raises not faster than 30°C/h and reaches plateau between 69 - 98°C. Process is being continued in such temp. for 2-3,5h (d) - (e). Then, in the phase (e) - (f) heating is off and temperature gradually falls down for about 1h.

Overall duration of the steps (a) - (e) is controlled such that the maximum duration of 375min is not exceed, i.e. the process according to the invention ends in step (e).

### Example 1

According to an example embodiment of the invention, the elements are produced as follows. The dry ingredients (that is 0/2 mm standard sand, 2/8 mm granite, 8/16 mm granite and sulphate-free cement) are placed in the mixer and mixed for 3 minutes. Then, the water is added with the superplasticizer and mixing process is continued for another three 3 minutes. The ingredients content in the mixture is as follows (kg/m³):

| | |
|---|---|
| Sulphate-free cement CEM I 42,5 R | 316 kg/m³ |
| Sand | 616 kg/m³ |
| Granite aggregate, 2-8 mm | 590 kg/m³ |
| Granite aggregate, 8-16 mm | 880 kg/m³ |
| Water | 125 kg/m³ |
| Plasticizer 'Dynamon NRG 1010' (Mapei) | 3.4 kg/m³ |
| Potassium carbonate (e.g. by Brenntag, powder 99% K₂CO₃) | 5.3 kg/m³ |
| Potassium lignosulphonate | 6 kg/m³ |

Then, the mixture is placed into a mould which is already equipped with tightened prestressing tendons. Mixing and feeling the mould takes place at the temperature of ca. 18°C. The liquid mixture undergoes compaction on a vibrating table within three minutes. Then, the moulds filled with concrete are placed in a steam curing chamber, where the temperature increases from the initial value of 18°C to 80°C at a rate of 30°/h and therefore the temperature increases gradually and reaches the target value of 80°C after two hours and four minutes; then the process continues with the main treatment smoothly without interruptions. The atmosphere within the steam curing chamber is humid and the steam content expressed as relative humidity exceeds 80%. The temperature inside the concrete does not have to be controlled and may increase even to 89°C. Thermal treatment lasts 4h, but after ca. 3h, the heating system is turned off and consequently the temperature drops during the last hour and reaches ca. 50°C after about 4h. The tension is released after thermal treatment completion because the compressive strength of concrete at that moment is ca. 50 MPa. After leaving the steam curing chamber, the elements should remain in the hall for ca. 24h because they must not be exposed to sunlight throughout such period and they must also be protected against frost for at least three days. It is preferred that the elements cool down on their own throughout the above-mentioned period of ca. 24h after their removal from the moulds till they reach the ambient temperature (not lower than 10°C). The elements are cured in the lying position, on suitable supports.

### Example 2

In the second exemplary embodiment of the invention, dry mixture is prepared in the temperature ca. 28°C. The dry mixture includes:

| | |
|---|---|
| Sulphate-free fine cement CEM I 52,5 R | 330 kg/m³ |
| Aggregate 0-2 mm | 695 kg/m³ |
| Aggregate 2-8 mm | 462 kg/m³ |
| Aggregate 8-16 mm | 818 kg/m³ |
| Plasticiser Premia 205 (by Chryso) | 4 kg/m³ |
| Sodium carbonate (by Brenntag NaCOs 99% powder) | 10 kg/m³ |

| | |
|---|---|
| Calcium lignosulphonate (liquid solution, 35% vol) | 4.5 kg/m³ |
| Silica fume | 23 kg/m³ |
| Water: | 119 kg/m³ |

Dry components are intensively mixed within 3 minutes; after that time water with plasticiser and calcium lignosulphonate is added and mixed for 3 more minutes until homogenization. Consecutively, moulds are filled with concrete, vibrated and placed them in the curing chamber where the relative humidity is approx. 79% and where the temperature is kept on a level of 75°C. In this embodiment no pre-treatment is necessary. The treatment in the target temperature 75°C is continued for 270 minutes. After leaving the curing chamber precast elements are cooled down for about 2 hours in a temperature 20°C. The precast elements after said treatments should have strength exceeding 50 MPa.

The described technology may also be used for the production of other kinds of precast and prestressed elements, for example concrete poles or prefabricated binding structures and floor beams etc.

Invention application shall significantly shorten the concrete curing time and thus increase the production capacities of precast elements production lines. The effect in question is obtained in the conditions where the unfavourable phenomenon of delayed ettringite formation is completely eliminated. The prefabricated elements produced applying the method according to the invention demonstrate strength of at least 48 MPa, directly after the end of heat treatment. This happens no later than ca. 5h after the thermal treatment beginning and, depending on the mixture composition, may happen as soon as 4 hours after the start of the process. It allows one to release the tendon tension immediately after treatment completion, which significantly improves production line efficiency. Invention application is especially beneficial during the manufacture of large quantities of precast elements; this concerns the railway sleepers and prestressed concrete poles and piles because in their case, shortening the mixture curing time is directly linked with production capacities of the prefabrication line. That type of products has to meet particularly strict requirements in the scope of strength and the cement applied according to the invention allows one to avoid volume changes in concrete which cause tensile stress after cement setting, when the mixture is no longer plastic. Consequently, the described solution eliminates the risk of cracks formation in precast elements.

## Claims

1. Method for production of concrete precast elements made of prestressed concrete, in which
- a mixture containing 220 - 500 kg/m³ of sulphate-free cement having less than 0.5% by mass of sulphates, expressed as SO₃, and an admixture of 0.2% - 4% by mass of cement of sodium or potassium carbonates or phosphates and 0.5% - 3% by mass of cement of lignosulphonates undergoes homogenization in a special mixer and then
- a concrete precast element is formed by filling an appropriate mould with the mix, while the mould is equipped with prestressing tendons, like steel tendons, and maintains them in a state of tensile stress during the concrete curing period
- where said precast elements in the moulds undergo thermal treatment in the curing chamber in steam atmosphere at the temperature of 69 - 98°C for a time of 240 minutes to 375 minutes.

2. The method for production of concrete precast elements according to claim 1 **characterised in that** lignosulphonates are sodium or calcium lignosulphonates.

3. The method for production of concrete precast elements according to claim 1, **characterised in that** the sulphate-free cement's specific surface area is higher than 3900 cm²/g, according to the Blaine's method.

4. The method for production of concrete precast elements according to claims 1 or 2 **characterised in that** to the concrete mixture is added 5 - 8% by mass of cement of silica fume.

5. The method for production of concrete precast elements according to one of the abovementioned claims, **characterised in that** the thermal treatment of the precast elements in a steam atmosphere takes place under the pressure falling within the range of 80 - 100% of saturated vapour pressure.

6. The method for production of concrete precast elements according to one of the abovementioned claims, **characterised in that** the thermal treatment process includes a pre thermal treatment and a main thermal treatment; the pre-treatment starting at the temperature of 10 - 20°C, which is then gradually increased at a rate not exceeding 30°C/h eventually reaching the main thermal treatment temperature 69 - 98°C.

7. The method for production of concrete precast elements according to one of the abovementioned claims, **characterised in that** the thermal treatment of the precast elements takes place at the temperature of 80 - 85°C.

8. The method of production precast elements according to one of the above-mentioned claims, **characterised in that** after the removal from the moulds, the elements are cooled down till they reach a temperature not lower than 10°C and then cured at that temperature for at least 24 h.

## Patentansprüche

1. Verfahren zur Herstellung von Betonfertigteilen aus vorgespanntem Beton, wobei
- eine Mischung, bestehend aus 220 - 500 kg/m³ sulfatfreiem Zement mit weniger als 0,5 Gew.-% Sulfaten, ausgedrückt als SO₃, und einer Beimischung von 0,2 - 4 Gew.-% Zement mit Natrium- oder Kaliumcarbonaten oder - phosphaten sowie 0,5 - 3 Gew.-% Zement mit Ligninsulfonaten, in einem speziellen Mischer homogenisiert wird und dann
- ein Betonfertigteil durch Füllen einer geeigneten Form mit der Mischung geformt wird, wobei die Form mit Spanngliedern, wie Stahlspanngliedern, versehen ist und diese während der Aushärtezeit des Betons unter Zugspannung hält
- wobei die Fertigteile in den Formen in der Aushärtekammer unter Dampfatmosphäre bei einer Temperatur von 69 - 98°C für einen Zeitraum zwischen 240 Minuten und 375 Minuten thermisch behandelt werden.

2. Verfahren zur Herstellung von Betonfertigteilen nach Anspruch 1, **dadurch gekennzeichnet, dass** die Ligninsulfonate Natrium- oder Calciumligninsulfonate sind.

3. Verfahren zur Herstellung von Betonfertigteilen nach Anspruch 1, **dadurch gekennzeichnet, dass** die spezifische Oberfläche des sulfatfreien Zements nach dem Blaine-Verfahren größer als 3900 cm²/g ist.

4. Verfahren zur Herstellung von Betonfertigteilen nach Anspruch 1 oder 2, **dadurch gekennzeichnet, dass** der Betonmischung 5 - 8 Gew.-% Silikastaubzement zugesetzt werden.

5. Verfahren zur Herstellung von Betonfertigteilen nach einem der vorangehenden Ansprüche, **dadurch gekennzeichnet, dass** die thermische Behandlung der Fertigteile unter Dampfatmosphäre bei einem Druck im Bereich von 80 - 100 % des Sättigungsdampfdrucks erfolgt.

6. Verfahren zur Herstellung von Betonfertigteilen nach einem der vorangehenden Ansprüche, **dadurch gekennzeichnet, dass** der thermische Behandlungsprozess eine thermische Vorbehandlung und eine thermische Grundbehandlung umfasst, wobei die thermische Vorbehandlung bei einer Temperatur von 10 - 20°C beginnt, die dann allmählich mit einer Geschwindigkeitsrate von nicht mehr als 30°C/h erhöht wird, um schließlich die Temperatur der thermischen Grundbehandlung von 69 - 98°C zu erreichen.

7. Verfahren zur Herstellung von Betonfertigteilen nach einem der vorangehenden Ansprüche, **dadurch gekennzeichnet, dass** die thermische Behandlung der Fertigteile bei einer Temperatur von 80 - 85°C erfolgt.

8. Verfahren zur Herstellung von Betonfertigteilen nach einem der vorangehenden Ansprüche, **dadurch gekennzeichnet, dass** die Fertigteile nach dem Entformen auf eine Temperatur von mindestens 10°C abgekühlt werden und anschließend bei dieser Temperatur mindestens 24 h lang aushärte.

## Revendications

1. Méthode de production d'éléments préfabriqués en béton précontraint selon laquelle :
- un mélange composé de ciment sans sulfates, dosé en quantité de 220 à 500 kg/m³, dont la teneur en sulfates SO₃ est inférieure à 0,5 % en poids, additivé de ciment contenant des carbonates ou des phosphates de sodium ou de potassium, dosé en quantité de 0,2 % à 4 % en poids, et additivé de ciment contenant des lignosulfonates, dosé en quantité de 0,5% à 3% en poids, est soumis à l'homogénéisation dans un mélangeur spécial, ensuite
- un élément préfabriqué en béton est formé par le remplissage d'un moule approprié avec du mélange, le moule étant équipé de fils de précontrainte, tels fils en acier, ces fils étant maintenus par le moule en état de contrainte de traction pendant la période de durcissement du béton ;
- lesdits éléments préfabriqués dans des moules sont soumis à un traitement thermique dans une enceinte de durcissement dans une ambiance de vapeur d'eau à une température comprise entre 69 et 98°C pendant le temps compris entre 240 minutes et 375 minutes.

2. Méthode de production d'éléments préfabriqués en béton précontraint selon la revendication 1, **caractérisée en ce que** les lignosulfonates utilisés sont ceux de sodium ou de calcium.

3. Méthode de production d'éléments préfabriqués en béton précontraint selon la revendication 1, **caractérisée en ce que** la surface spécifique du ciment ne contenant pas de sulfates est supérieure à 3900 cm²/g, selon le test de Blaine.

4. Méthode de production d'éléments préfabriqués en béton précontraint selon la revendication 1 ou 2, **caractérisée en ce que** dans le mélange de béton est ajouté entre 5 et 8% en poids de ciment contenant des vapeurs de silice.

5. Méthode de production d'éléments préfabriqués en béton précontraint selon l'une des revendications visées ci-dessus, **caractérisée en ce que** le traitement thermique des éléments préfabriqués dans l'ambiance de vapeur d'eau est réalisé à une pression comprise entre 80 et 100% de la pression de la vapeur en état saturé.

6. Méthode de production d'éléments préfabriqués en béton précontraint selon l'une des revendications visées ci-dessus, **caractérisée en ce que** le procédé de traitement thermique tient compte d'un traitement thermique initial et un traitement thermique proprement dit ; le traitement thermique initial démarre à une température de 10 à 20°C, laquelle température est ensuite progressivement augmentée à un rythme qui ne dépasse pas 30°C/h, pour atteindre finalement la température de traitement thermique proprement dit, de 69 à 98°C.

7. Méthode de production d'éléments préfabriqués en béton précontraint selon l'une des revendications visées ci-dessus, **caractérisée en ce que** le traitement thermique des éléments préfabriqués est réalisé à une température de 80 à 85°C.

8. Méthode de production d'éléments préfabriqués selon l'une des revendications visées ci-dessus, **caractérisée en ce que** les éléments sortis des moules sont refroidis pour atteindre une température non inférieure à 10°C, après quoi ils sont durcis à cette température pendant 24 heures minimum.
